(19) **Europäisches Patentamt**
**European Patent Office**
**Office européen des brevets**

(11) **EP 3 644 742 B1**

(12) **EUROPEAN PATENT SPECIFICATION**

(45) Date of publication and mention
of the grant of the patent:
**10.11.2021 Bulletin 2021/45**

(51) Int Cl.:
***A01N 43/80*** *(2006.01)*  ***A01N 35/02*** *(2006.01)*
***A01P 1/00*** *(2006.01)*

(21) Application number: **18734396.7**

(22) Date of filing: **06.06.2018**

(86) International application number:
**PCT/US2018/036231**

(87) International publication number:
**WO 2019/005438 (03.01.2019 Gazette 2019/01)**

(54) **MICROBICIDAL COMPOSITION**

MIKROBIZIDE ZUSAMMENSETZUNG

COMPOSITION MICROBICIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2017 US 201762526028 P**

(43) Date of publication of application:
**06.05.2020 Bulletin 2020/19**

(73) Proprietor: **Nutrition & Biosciences USA 1, LLC
Rochester, NY 14623 (US)**

(72) Inventors:
- **VAN DER KRAAN, Geert**
  **CH-8810 Horgen (CH)**
- **SCHILLE, Nadine**
  **Wilmington**
  **DE 19805 (US)**
- **WIDERA, Imke**
  **CH-8810 Horgen (CH)**

(74) Representative: **Houghton, Mark Phillip
Patent Outsourcing Limited
Cornerhouse
1 King Street
Bakewell
Derbyshire DE45 1DZ (GB)**

(56) References cited:
**WO-A1-91/07090        WO-A1-93/17558
WO-A2-2009/124871    US-A1- 2006 252 849**

- **S A Blenkinsopp ET AL: "Electrical enhancement of biocide efficacy against Pseudomonas aeruginosa biofilms", Applied and Environmental Microbiology, 1 November 1992 (1992-11-01), pages 3770-3773, XP055498627, United States Retrieved from the Internet: URL:http://aem.asm.org/content/58/11/3770. full.pdf**
- **E.S. MELIN ET AL: "Treatment of ozonated water in biofilters containing different media", WATER SCIENCE AND TECHNOLOGY, vol. 41, no. 4-5, 1 February 2000 (2000-02-01), pages 57-60, XP055498628, ISSN: 0273-1223, DOI: 10.2166/wst.2000.0425**

**Description**

This invention relates to microbicidal compositions containing an isothiazolone mixture and glyoxal.

US 8,349,881, mentions an antimicrobial combination to reduce the oxidation of $S^0$ during transportation, aldehydes are generally disclosed in a list among other biocides; synergy however, is not disclosed. WO2009/124871A2 discloses the use of aldehyde-based biocides, including glyoxal, in the control of biofilms. S A Blenkinsopp et al. in Applied and Environmental Microbiology, 1992, pages 3770-3773, teaches the electrical enhancement of biocides, including isothiazolones, in controlling biofilms.

The present invention is directed to a method of controlling biofilm, the method comprising adding to an aqueous medium, a synergistic microbicidal composition, the synergistic microbicidal composition comprising a combination of (i) 5-chloro-2-methyl-4-isothiazolin-3-one and 2-methyl-4-isothiazolin-3-one in a ratio of 3:1, and (ii) glyoxal, in a ratio range of 1:50 to 1:1, wherein the composition performs enhanced biofilm removal compared to when components (i) and (ii) are used individually, and wherein the aqueous medium is in contact with a biofilm. The composition is able to perform enhanced biofilm removal vs. when both components are used individually.

There is further disclosed herein a method for controlling the growth or metabolic activity of microorganisms in aqueous media by adding this combination to an aqueous medium in a ratio as described herein.

The following terms have the designated definitions, unless the context clearly indicates otherwise. The term "CMIT/MIT" refers to a mixture of 5-chloro-2-methyl-4-isothiazolin-3-one and 2-methyl-4-isothiazolin-3-one in a ratio of 3:1, (CAS Registry Nos. 55965-84-9 [mixture], or 26172-55-4 [CMIT], 2682-20-4 [MIT]). The term "glyoxal" refers to CAS Registry No. 107-22-2, and is commonly found as a 40% w/w solution in water, and may have multiple functions. The term "microbicide" refers to a compound capable of inhibiting the growth or metabolic activity of or controlling the growth or metabolic activity of microorganisms; microbicides include bactericides, fungicides, viricides, archaeacides and algaecides. The term "microorganism" includes, for example, fungi (such as yeast and mold), bacteria, virus, archaea and algae. The following abbreviations are used throughout the specification: ppm = parts per million by weight (weight/weight), mL = milliliter. Unless otherwise specified, temperatures are in degrees centigrade (°C), references to percentages are percentages by weight (wt%) and amounts and ratios are on an active ingredient basis.

The synergistic microbicidal composition used in the method of the present invention comprises CMIT/MIT in a ratio of 3:1 with glyoxal, in a ratio range of 1:50 to 1:1.

Both components are generally available as aqueous solution. CMIT/MIT is available from The Dow Chemical Company as KATHON™ Biocides, typically containing 14% w/w CMIT/MIT. Glyoxal is available from external resources, as an example from BASF as an aqueous 40% w/w solution.

Mixtures of glyoxal and CMIT:MIT are known as biocides both in aqueous compositions (WO93/17558A1) and as additives for building materials (US2006/252849A1).

The composition may be substantially free of microbicides other than CMIT/MIT or glyoxal, alternatively it has less than 1 wt% of microbicides other than CMIT/MIT and glyoxal based on total weight of active ingredients, preferably less than 0.5 wt%, preferably less than 0.2 wt.%, and preferably less than 0.1 wt%. Preferably, when the CMIT/MIT and glyoxal are added to an aqueous medium, the aqueous medium is substantially free of other microbicides, i.e., it has less than 1 wt% of microbicides other than the CMIT/MIT and glyoxal based on total weight of active ingredients, preferably less than 0.5 wt%, preferably less than 0.2 wt%, preferably less than 0.1 wt%.

The compositions may contain other ingredients, e.g., defoamers and emulsifiers. The microbicidal compositions can be used to inhibit the growth of microorganisms or higher forms of aquatic life (such as protozoans, invertebrates, bryozoans, dinoflagellates, crustaceans, mollusks, etc) by introducing a microbicidally effective amount of the compositions into an aqueous medium subject to microbial attack. Suitable aqueous media are found in, for example: petroleum processing fluids; fuel; oil and gas field functional fluids, such as injection fluids, hydraulic fracturing fluids, produced fluids, drilling mud, completion and workover fluids; oil and gas pipelines, separation, refining, transportation, and storage system; industrial process water; electrocoat deposition systems; cooling towers; air washers; gas scrubbers; mineral slurries; wastewater treatment; ornamental fountains; reverse osmosis filtration; ultrafiltration; ballast water; evaporative condensers; heat exchangers; pulp and paper processing fluids and additives; starch; plastics; emulsions; dispersions; paints; latices; coatings, such as varnishes; construction products, such as mastics, caulks, and sealants; construction adhesives, such as ceramic adhesives, carpet backing adhesives, and laminating adhesives; industrial or consumer adhesives; photographic chemicals; printing fluids; household products, such as bathroom and kitchen cleaners; cosmetics; toiletries; shampoos; soaps; personal care products such as wipes, lotions, sunscreen, conditioners, creams, and other leave-on applications; detergents; industrial cleaners; floor polishes; laundry rinse water; metalworking fluids; conveyor lubricants; hydraulic fluids; leather and leather products; textiles; textile products; wood and wood products, such as plywood, chipboard, flakeboard, laminated beams, oriented strandboard, hardboard, and particleboard; agriculture adjuvant preservation; nitrate preservation; medical devices; diagnostic reagent preservation; food preservation, such as plastic or paper food wrap; food, beverage, and industrial process pasteurizers; toilet bowls; recreational water; pools; and spas.

The specific amount of the microbicidal compositions necessary to inhibit or control the growth or metabolic activity of microorganisms in an application will vary. Typically, the amount of the composition is sufficient to control the growth or metabolic activity of microorganisms if it provides from 1 to 5000 ppm (parts per million) active ingredients of the composition. It is preferred that the combination of active ingredients (i.e., CMIT/MIT and glyoxal) of the composition be present in the medium to be treated in a lower limit of at least 10 ppm, preferably at least 20 ppm, preferably at least 100 ppm, preferably at least 300 ppm, preferably at least 500 ppm and at least 1000 ppm. It is preferred that the active ingredients of the composition be present in the locus in an upper limit of no more than 5000 ppm, preferably no more than 2000 ppm, preferably no more than 1000 ppm, preferably no more than 500 ppm, preferably no more than 300 ppm. In a method not according to the invention, a composition is treated to control microbial growth or metabolic activity by adding, together CMIT/MIT and glyoxal in amounts that would produce the concentrations indicated above.

EXAMPLES

**Example 1:** Synergy in the Planktonic Phase (reference example)

*Pseudomonas aeruginosa* (DSM: 50071) and E.coli (DSM: 1576) cultures were separately prepared from glycerol stocks; first they were streak plated and validated with a microscope. Single colonies were picked and shake flasks were inoculated and left overnight at 37 °C (TSB medium) to produce the initial inoculum. The challenge block (a 96 wells plate) was prepared using phosphate buffer at pH 7.3, (0.0027M potassium chloride, 0.137 M sodium chloride). The Biocide challenging was done at 30 °C. Inoculation took place at the start of the experiments and after 48 hours a re-inoculation was done. Challenging was monitored up to 7 days in total. In Table 1, the concentrations used for the synergy experiments are listed. Each experiment was done in triplicate.

**Table 1: Concentrations of CMIT/MIT and Glyoxal in the synergy experiments.**

(*Pseudomonas aeruginosa* & *E*. coli mix)

| In experiment combinations (listed in ppm) | | | | Stand alone (ppm) | |
|---|---|---|---|---|---|
| *CMIT/MIT* | *Glyoxal* | | | *CMIT/MIT* | *Glyoxal* |
| | (1:12.5) | (1:37.5) | (1:50) | | |
| 40 | 500 | 1500 | 2000 | 40 | 2000 |
| 26.7 | 333.3 | 1000 | 1333.3 | 26.7 | 1333.3 |
| 17.8 | 222.2 | 666.7 | 888.9 | 17.8 | 888.9 |
| 11.9 | 148.2 | 444.4 | 592.6 | 11.9 | 592.6 |
| 7.9 | 98.8 | 296.3 | 395.1 | 7.9 | 395.1 |
| 5.3 | 65.8 | 197.5 | 263.4 | 5.3 | 263.4 |
| 3.5 | 43.9 | 131.7 | 175.6 | 3.5 | 175.6 |
| 0 | 0 | 0 | 0 | 0 | 0 |

The inoculated assay block was challenged at 37 °C up to seven days with an inoculation taking place at the start of the experiments and after 48 hours. The inoculum prepared added between to $1*10^8$ to $1*10^9$ total cells/ml (in each well). At several timepoints 20 microliter aliquots of each treatment (well) were added to 96 well plates with TSB + Resazurin. These 96 well plates were filled with 'recovery' media (TSB 30 grams/liter). One of such plates was prepared for each column of the assay block. 180μl recovery media was added to each well of a 96 well plate, except for column 1 of the recovery plate. This column was filled with 180μl of one column of the assay block. The last three columns on the recovery plate were not pipetted. These columns represented the no template control for verifying proper plate set up and data reliability. The assay block sample was then diluted in steps of 10 fold by transferring 20μl from e.g. columns 1 to column 2 and from column 2 to column 3 (until column 9) by applying a multichannel pipet in each recovery plate. After pipetting the plates, they were sealed with a B-seal and incubated at 37°C in a non-shaking incubator.

The recovery plates were subsequently read (checked for microbial growth) at 24 and 48 hours after addition of the culture. Plate reading took place twice for each time point, to look at potential changes. Reading took place utilizing separate 96 wells plates pre filled with fresh media. From the wells with culture undergoing biocide challenge, 180 microliters was taken and added to column 1 of a recovery plate. From there the sample was diluted across the plate in steps of 10 fold until reaching column 9 of the recovery plate. This was done in triplicate for each point (the triplicate is already present in the biocide block viz. each point is truly determined in triplicate). Ranking of biocidal efficacy was done by recording color change of the resazurin. A color change indicated cell activity. Ranking was done per average value of three data points determined per experiment. (Recorded in log regrowth).

A similar approach for the *Thermus thermophilus* (DSM: 579) system was applied. Total concentration of biocides however was 300 ppm for the combined total actives, the temperature at which the experiments were performed was 60 °C, the media to grow *Thermus thermophilus* was DSMZ DSM 74-Media at pH 8.0. (Yeast extract (BD Difco) 4.0 g, Proteose peptone Nr. 3 (BD Difco) 8.0 g, NaCl 2.0 g Distilled water 1000.0 ml). The concentration ranges are listed in Table 2

**Table 2\*: Concentrations of CMIT/MIT and Glyoxal in the synergy experiments.**

*(Thermus thermophilus)*

| In experiment combinations (listed in ppm) | | | | Stand alone (ppm) | |
|---|---|---|---|---|---|
| *CMIT/MIT* (1:1) | *Glyoxal* | *CMIT/MIT* (1:3) | *Glyoxal* | *CMIT/MIT* | *Glyoxal* |
| 150 | 150 | 75 | 225 | 300 | 300 |
| 100 | 100 | 50 | 150 | 200 | 200 |
| 67 | 67 | 33 | 100 | 133 | 133 |
| 44 | 44 | 22 | 67 | 89 | 89 |
| 30 | 30 | 15 | 44 | 59 | 59 |
| 20 | 20 | 10 | 30 | 40 | 40 |
| 13 | 13 | 7 | 20 | 26 | 26 |
| 0 | 0 | 0 | 0 | 0 | 0 |

\* *Thermus thermophilus* is less sensitive to CMIT/MIT and more sensitive to Glyoxal vs. *Pseudomonas aeruginosa* and *E*.coli.

The challenging with biocides against *Thermus thermophilus* is done in a standard ocean matrix with a similar salinity of 2% (similar to the media where they are cultured in)

Table 3 summarizes the efficacy of CMIT/MIT and glyoxal and their combinations, as well as the Synergy Index of each combination. One measure of synergism is the industrially accepted method described by Kull, F.C.; Eisman, P.C.; Sylwestrowicz, H.D. and Mayer, R.L., in Applied Microbiology 9:538-541 (1961), using the ratio determined by the formula:

$$Q_a/Q_A + Q_b/Q_B = \text{Synergy Index ("SI")}$$

Wherein:

Qa   = Concentration of biocide A required to achieve a certain level of kill when used in combination with B

QA   = Concentration of biocide A required to achieve a certain level of kill when used alone

Qb   = Concentration of biocide B required to achieve a certain level of kill when used in combination with A

QB   = Concentration of biocide B required to achieve a certain level of kill when used alone

When the sum of Qa/QA and Qb/QB is greater than 1.0, antagonism is indicated. When the sum is 1.0, additivity is indicated, and when less than 1.0, synergism is demonstrated.

**Table 3:** Summarized synergy values, determined after 48 hours

| Bacterial system | Ratio CMIT MIT/ Glyoxal | CMIT/MIT standalone ppm 48 h pass (ppm) | Glyoxal standalone 48 h pass (ppm) | CMIT/MIT in formulation 48 h pass (ppm) | Glyoxal in formulation 48 h pass (ppm) | Synergy index |
|---|---|---|---|---|---|---|
| *P.aeruginosa/ E.coli* | 1:12.5 | 17.8 | ≥2000 | 11.9 | 148 | <0.74 |
| *P.aeruginosa/ E.coli* | 1:37.5 | 17.8 | ≥2000 | 7.9 | 296 | ≤0.58 |

(continued)

| Bacterial system | Ratio CMIT MIT/ Glyoxal | CMIT/MIT standalone ppm 48 h pass (ppm) | Glyoxal standalone 48 h pass (ppm) | CMIT/MIT in formulation 48 h pass (ppm) | Glyoxal in formulation 48 h pass (ppm) | Synergy index |
|---|---|---|---|---|---|---|
| *P.aeruginosa/ E.coli* | 1:50 | 17.8 | ≥2000 | 7.9 | 395 | ≤0.64 |
| *T.thermophilus* | 1:1 | 133 | 40 | 20 | 20 | 0.53 |
| *T.thermophilus* | 1:3 | 133 | 40 | 7 | 20 | 0.6 |

**Example 2: Biofilm Dissipation Synergy**

*A Pseudomonas aeruginosa* culture was prepared from glycerol stocks. First, the culture was streak plated. Single colonies were selected and shake flasks were inoculated and left overnight at 37 °C (TSB medium). The culture was diluted in phosphate buffer pH 7.3 1: 1000000 prior to set up the biofilm plate Biofilm was developed overnight on P&G MBEC plates. The 96 well plates were covered with the lid holding the pegs partially submerged in the growth media. Biofilm was developed on the pegs leading to a total cell amount of $7*10^{10}$ cells per peg. The top plates (with the pegs) were then subsequently washed and then placed into a 96 well challenge plate with the biocidal components in the given amounts. To demonstrate this particular purpose of biofilm removal, a CMIT/MIT to glyoxal ratio of 1:50, (demonstrated to also have synergy in the planktonic testing) was used. The contact time of the biofilms with the microbicidal mix was 24 hours. After the challenging, the biofilms were gently washed, sonicated from the pegs into recovery media (TSB 30g/l, with resazurin, 0.01% ), from these wells directly after sonication 10× dilution series were made on separate plates. These were left to recover for 3 to 5 days at 30 °C. The serial dilutions were checked for cell re-growth. This was indicated via the dilution series, recording at which 10 fold dilution the resazurin turned pink, thereby indicating cellular activity. When resazurin did not show any coloring, this indicated no respiration and signaled total biofilm cell death. It could then be back-calculated how many cells remained after challenging of the biofilm with biocides. Table 4 lists the used concentrations in the challenge plate, all experiments were performed in triplicate.

**Table 4:** Concentrations of CMIT/MIT and Glyoxal in the synergy experiments (biofilm dissipation (*Pseudomonas aeruginosa* & *E.*coli)

| In experiment combinations (listed in ppm) | | Stand alone (ppm) | |
|---|---|---|---|
| *CMIT/MIT* | *Glyoxal* | *CMIT/MIT* | *Glyoxal* |
| | (1:50) | | |
| 40 | 2000 | 40 | 2000 |
| 26.7 | 1333.3 | 26.7 | 1600 |
| 17.8 | 888.9 | 17.8 | 1280 |
| 11.9 | 592.6 | 11.9 | 1024 |
| 7.9 | 395.1 | 7.9 | 819.2 |
| 5.3 | 263.4 | 5.3 | 655.4 |
| 3.5 | 175.6 | 3.5 | 524.3 |
| 0 | 0 | 0 | 0 |

**Table 5:** Summarized synergy values on biofilm removal, determined after 24 hour biofilm contact time and a 5 day regrowth (recovery time)

| * Pass is determined as total eradication of the biofilm in both replicates. | | | | |
|---|---|---|---|---|
| Bacterial system | Glyoxal (standalone pass) - ppm | CMIT/MIT (standalone pass) - ppm | Mixture (1:50) pass in mix Glyoxal CMIT/MIT | | Synergy index |
| *P.aeruginosa* | 1280 | 26,67 | 592,59 | 11,85 | 0.9 |

**Claims**

1. A method of controlling biofilm, the method comprising adding to an aqueous medium, a synergistic microbicidal composition, the synergistic composition comprising a mixture of (i) 5-chloro-2-methyl-4-isothiazolin-3-one and 2-methyl-4-isothiazolin-3-one in a ratio of 3:1 with (ii) glyoxal, in a ratio range of 1:50 to 1:1, wherein the composition performs enhanced biofilm removal compared to when components (i) and (ii) are used individually, and wherein the aqueous medium is in contact with a biofilm.

**Patentansprüche**

1. Verfahren zur Kontrolle von Biofilm, wobei das Verfahren die Zugabe einer synergistischen mikrobiziden Zusammensetzung zu einem wässrigen Medium umfasst, wobei die synergistische Zusammensetzung eine Mischung aus (i) 5-Chlor-2-methyl-4-isothiazolin-3-on und 2-Methyl-4-isothiazolin-3-on in einem Verhältnis von 3:1 mit (ii) Glyoxal in einem Verhältnisbereich von 1:50 bis 1:1 umfasst, wobei die Zusammensetzung eine verbesserte Biofilmentfernung durchführt im Vergleich zur einzelnen Verwendung der Komponenten (i) und (ii), und wobei das wässrige Medium in Kontakt mit einem Biofilm steht.

**Revendications**

1. Procédé de contrôle de biofilm, le procédé comprenant l'ajout, à un milieu aqueux, d'une composition microbicide synergique, la composition synergique comprenant un mélange de (i) 5-chloro-2-méthyl-4-isothiazolin-3-one et de 2-méthyl-4-isothiazolin-3-one dans un rapport de 3:1 avec (ii) du glyoxal dans un intervalle de rapport de 1:50 à 1:1, dans lequel la composition réalise une élimination améliorée de biofilm que lorsque les composants (i) et (ii) sont utilisés individuellement, et dans lequel le milieu aqueux est en contact avec un biofilm.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8349881 B
- WO 2009124871 A2
- WO 9317558 A1
- US 2006252849 A1

**Non-patent literature cited in the description**

- **S A BLENKINSOPP et al.** *Applied and Environmental Microbiology,* 1992, 3770-3773
- *CHEMICAL ABSTRACTS,* 55965-84-9
- *CHEMICAL ABSTRACTS,* 107-22-2
- **KULL, F.C. ; EISMAN, P.C. ; SYLWESTROWICZ, H.D. ; MAYER, R.L.** *Applied Microbiology,* 1961, vol. 9, 538-541